# EUROPEAN PATENT APPLICATION

(11) **EP 4 696 469 A1**
(43) Date of publication of application: **18.02.2026**
(21) Application number: 25756104.3
(22) Date of filing: 12.06.2025
(51) Int. Cl.: B25J 15/08, B25J 15/04

(54) **HAND DEVICE AND ROBOT**

(30) Priority: 28.06.2024 JP 2024105159
(71) Applicant: DMG Mori Co., Ltd., Nara-shi, Nara 630-8122 (JP)
(72) Inventor: YODA, Tomoaki, Nara-shi, Nara 630-8122 (JP); NAKAGAWA, Koji, Nara-shi, Nara 630-8122 (JP); MORI, Hiroyoshi, Nara-shi, Nara 630-8122 (JP); NAKAOKA, Hiromitsu, Nara-shi, Nara 630-8122 (JP)
(74) Representative: Isarpatent
(86) International application number: PCT/JP2025/021260
(87) International publication number: WO 2026/004623

(57) **Abstract**

A hand device (310) includes a first gripping claw (320A), a second gripping claw (320B) facing the first gripping claw (320A) while being spaced apart therefrom and gripping an object together with the first gripping claw (320A), a first drive mechanism (351) including a motor (340) and causing at least one gripping claw (320) of the first gripping claw (320A) and the second gripping claw (320B) to slide, using an output from the motor (340) as a driving force, and a second drive mechanism (352) including an air-based piston cylinder (330) and causing the at least one gripping claw (320) of the first gripping claw (320A) and the second gripping claw (320B) to slide, using an output from the piston cylinder (330) as a driving force.

## Description

### TECHNICAL FIELD

The present invention relates to a hand device and a robot.

### BACKGROUND ART

For example, Japanese Patent Laying-Open No. 2017-102825 (PTL 1) discloses a combined system including a machine tool having a workpiece fixing jig integrally movable with a table, a workpiece stocker that stores a workpiece, and a robot system having a robot that supplies or takes out the workpiece to or from the workpiece fixing jig and the workpiece stocker. The robot includes a robot hand for grip a workpiece to be handled.

### CITATION LIST

### PATENT LITERATURE

PTL 1: Japanese Patent Laying-Open No. 2017-102825

### SUMMARY OF INVENTION

### TECHNICAL PROBLEM

As disclosed in PTL 1 above, a hand device is known that includes a pair of gripping claws for gripping an object such as a workpiece. Such a hand device is required to be able to grip various objects of different dimensions for enhanced versatility of the hand device. The hand device is also required to have a sufficient grip force to prevent falling of the object from the hand device.

An object of the present invention is to provide a hand device and a robot that can grip various objects of different dimensions and have a sufficient grip force.

### SOLUTION TO PROBLEM

A hand device according to the present invention includes: a first gripping claw; a second gripping claw facing the first gripping claw while being spaced apart therefrom, the second gripping claw gripping an object together with the first gripping claw; a first drive mechanism including a motor and causing at least one gripping claw of the first gripping claw and the second gripping claw to slide, using an output from the motor as a driving force; and a second drive mechanism including an air-based piston cylinder and causing the at least one gripping claw of the first gripping claw and the second gripping claw to slide, using an output from the piston cylinder as a driving force.

A robot according to the present invention includes a first arm, a second arm pivotably attached to the first arm, and the above-described hand device pivotably attached to the second arm.

### ADVANTAGEOUS EFFECTS OF INVENTION

According to the present invention, a hand device and a robot can be provided that can grip various objects of different dimensions and have a sufficient grip force.

### BRIEF DESCRIPTION OF DRAWINGS

Fig. 1 is a top view of a transport system.
Fig. 2 is a simplified top view of the transport system in Fig. 1.
Fig. 3 is a perspective view showing the relationship of a pallet, a workpiece hand, a shelf plate, and a teaching hand to a master hand.
Fig. 4 is a perspective view of the master hand.
Fig. 5 is another perspective view of the master hand.
Fig. 6 is a view for illustrating a structure of the master hand.
Fig. 7 is a perspective view of a pallet stocker in Fig. 1.
Fig. 8 is a perspective view of the pallet stocker in the area enclosed by a chain double-dashed line VIII in Fig. 7.
Fig. 9 is a block diagram showing a control system of the transport system in Fig. 1.
Fig. 10 is a top view showing a first step of workpiece machining using a workpiece stocker.
Fig. 11 is a top view showing a second step of workpiece machining using the workpiece stocker.
Fig. 12 is a top view showing a third step of workpiece machining using the workpiece stocker.
Fig. 13 is a top view showing a fourth step of workpiece machining using the workpiece stocker.
Fig. 14 is a top view showing a fifth step of workpiece machining using the workpiece stocker.
Fig. 15 is a top view showing a sixth step of workpiece machining using the workpiece stocker.
Fig. 16 is a top view showing a first step of workpiece machining using a setup station.
Fig. 17 is a top view showing a second step of workpiece machining using the setup station.
Fig. 18 is a top view showing a third step of workpiece machining using the setup station.
Fig. 19 is a top view showing a fourth step of workpiece machining using the setup station.
Fig. 20 is a top view showing a fifth step of workpiece machining using the setup station.
Fig. 21 is a top view showing a first step of loading a pallet into the pallet stocker.
Fig. 22 is a top view showing a second step of loading the pallet into the pallet stocker.
Fig. 23 is a top view showing a third step of loading the pallet into the pallet stocker.
Fig. 24 is a perspective view of the workpiece hand.
Fig. 25 is a front view of the workpiece hand in Fig. 24.
Fig. 26 is a top view of the workpiece hand in Fig. 24.
Fig. 27 is a side view of the workpiece hand in Fig. 24.
Fig. 28 is a sectional view of the workpiece hand as viewed in the direction of an arrow XXVIII-XXVIII in Fig. 24.
Fig. 29 is a sectional view of the workpiece hand as viewed in the direction of an arrow XXIX-XXIX in Fig. 28.
Fig. 30 is a sectional view of the workpiece hand as viewed in the direction of an arrow XXX-XXX in Fig. 28.
Fig. 31 is a sectional view of the workpiece hand as viewed in the direction of an arrow XXXI-XXXI in Fig. 28.
Fig. 32 is a sectional view showing an internal structure of a piston cylinder in Fig. 28.
Fig. 33 schematically shows sliding of a first gripping claw and a second gripping claw by a first drive mechanism (servomotor).
Fig. 34 schematically shows sliding of the first gripping claw and the second gripping claw by a second drive mechanism (piston cylinder).

### DESCRIPTION OF EMBODIMENTS

An embodiment of the present invention will be described with reference to the drawings. In the drawings referred to below, the same or corresponding components have the same reference signs allotted.

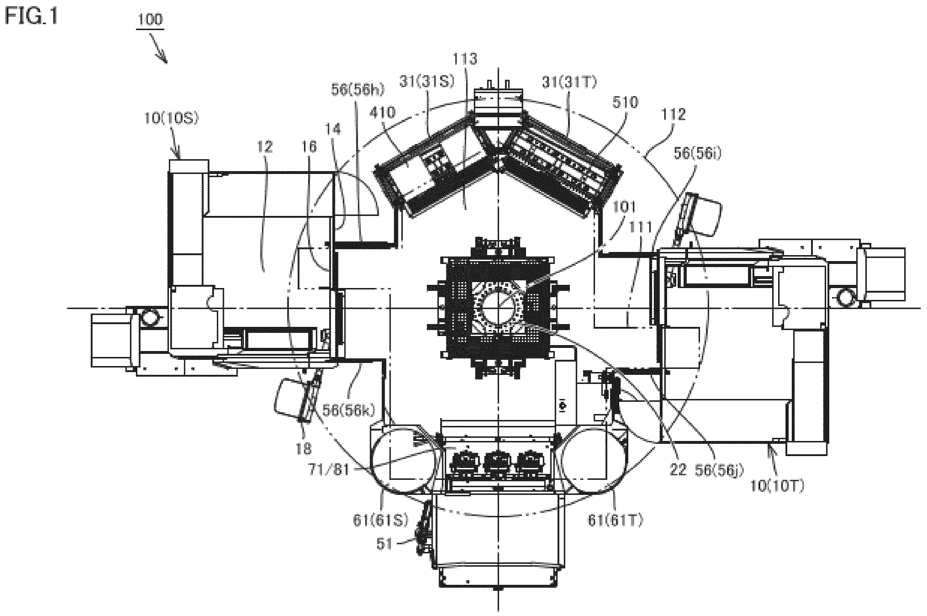

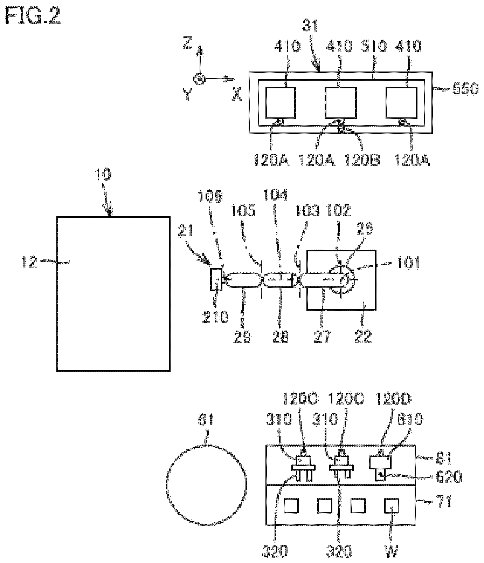

Fig. 1 is a top view of a transport system. Fig. 2 is a simplified top view of the transport system in Fig. 1.

Referring to Figs. 1 and 2, a transport system 100 has a robot 21 and a robot base 22.

In a typical example, robot 21 is a 6-axis articulated robot. Robot 21 has a base 26, a first arm 27, a second arm 28, a hand attachment portion 29, and a master hand 210.

Robot base 22 is a support stand that supports robot 21 and is fixed to the floor of a plant or the like. Robot base 22 is made of metal. Base 26 is connected to robot base 22 to be rotatable about a swivel center axis 101. Swivel center axis 101 is an imaginary straight line corresponding to the swivel center of robot 21 and extends in the upward-downward direction.

First arm 27 is attached to base 26. First arm 27 is pivotable about a pivot center axis 102 disposed at the attachment portion (joint) of first arm 27 to base 26. Second arm 28 is attached to first arm 27. Second arm 28 is pivotable about a pivot center axis 103 disposed at the attachment portion (joint) of second arm 28 to first arm 27, and can rotate hand attachment portion 29 about a rotation center axis 104 along second arm 28. Hand attachment portion 29 is attached to second arm 28. Hand attachment portion 29 is pivotable about a pivot center axis 105 disposed at the attachment portion (joint) of hand attachment portion 29 to second arm 28, and can rotate master hand 210 about a rotation center axis 106 along hand attachment portion 29.

Master hand 210 is attached to hand attachment portion 29 as an end effector. Master hand 210 is attached to second arm 28 to be pivotable about pivot center axis 105. Master hand 210 is attached to second arm 28 via hand attachment portion 29. Second arm 28 is attached to first arm 27 to be pivotable about pivot center axis 103.

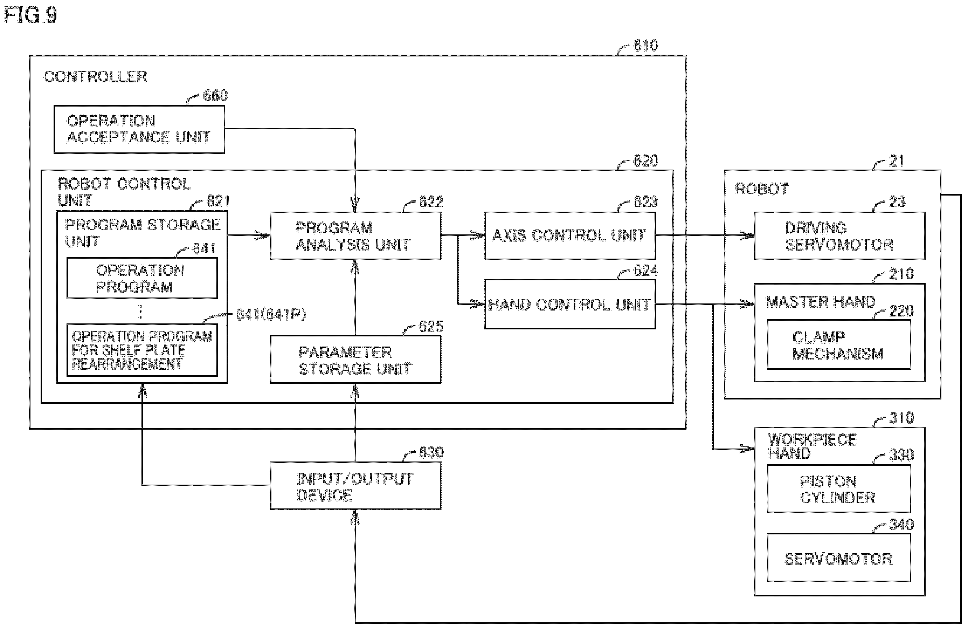

Robot 21 further has a plurality of driving servomotors 23 (see Fig. 9, which will be referred to later) for causing base 26, first arm 27, second arm 28, hand attachment portion 29, and master hand 210 to operate respectively about the above-described axes (swivel center axis 101, pivot center axis 102, pivot center axis 103, rotation center axis 104, pivot center axis 105, and rotation center axis 106).

In Fig. 1, the area in which master hand 210 moves (the operating area of master hand 210) in transport system 100 is indicated by a chain double-dashed line 111. In addition, the maximum area in which master hand 210 can move is indicated by a chain double-dashed line 112, which extends in an arc shape about swivel center axis 101.

Transport system 100 further has a machine tool 10 (10S, 10T), a pallet stocker 31 (31S, 31T), a workpiece stocker 71, a hand stocker 81, and a setup station 61 (61S, 61T).

Machine tool 10 (10S, 10T), pallet stocker 31 (31S, 31T), workpiece stocker 71, hand stocker 81, and setup station 61 (61S, 61T) are provided around robot base 22. Machine tool 10 (10S, 10T), pallet stocker 31 (31S, 31T), workpiece stocker 71, hand stocker 81, and setup station 61 (61S, 61T) are located side by side along the circumferential direction of swivel center axis 101. In the top view shown in Fig. 1, at least part of each device such as machine tool 10 (10S, 10T), pallet stocker 31 (31S, 31T), workpiece stocker 71, hand stocker 81, and setup station 61 (61S, 61T) overlaps the operating area of master hand 210 which is indicated by chain double-dashed line 111.

The robot in the present invention is not limited to the above-described 6-axis articulated robot, and may be, for example, a robot (gantry loader) capable of moving a transport object in the directions of three axes mutually orthogonal to one another. In addition, the machine tool, pallet stocker, workpiece stocker, hand stocker, and setup station may be disposed side by side linearly.

Machine tool 10 is a machining center that performs workpiece machining by bringing a rotating tool into contact with the workpiece. Machine tool 10 is a numerically controlled (NC) machine tool in which various operations for workpiece machining are automated through numerical control by a computer.

Machine tool 10 may be a multi-tasking machine having a turning function using a fixing tool and a milling function using a rotating tool, or an additive manufacturing (AM)/subtractive manufacturing (SM) hybrid machine capable of additive manufacturing of workpieces and subtractive manufacturing of workpieces. Machine tool 10S and machine tool 10T may be machine tools of the same type or machine tools of different types.

Machine tool 10 has a cover body 14. Cover body 14 forms the external appearance of machine tool 10 and also defines a machining area 12. Machining area 12 is the space in which the workpiece is machined, and is hermitically sealed by cover body 14 so as to prevent foreign matter such as chips or cutting oil associated with workpiece machining from leaking out of the machining area.

Cover body 14 has an opening 16. Robot 21 transports a transport object such as a workpiece W or a pallet 410 to machining area 12 through opening 16. Opening 16 has a door or a shutter that is openable and closable.

In machining area 12, a tool spindle for rotating a tool, a table for holding pallet 410, and the like are provided.

Machine tool 10 further has an operation panel 18. Operation panel 18 includes a controller that controls an operation of machine tool 10, a display unit (display) for displaying various types of information related to machining, and an operation unit that accepts various operations for machine tool 10.

Machine tool 10S and machine tool 10T are positioned so as to face each other with robot base 22 in between. Machine tool 10S and machine tool 10T are provided at angular positions offset by 180° in the circumferential direction about swivel center axis 101.

Pallet stocker 31 is a device for storing pallet 410. Pallet stocker 31 is provided between machine tool 10S and machine tool 10T in the circumferential direction about swivel center axis 101. Pallet stocker 31S and pallet stocker 31T are provided adjacent to each other in the circumferential direction about swivel center axis 101.

Workpiece stocker 71 is a device for storing workpiece W. Workpiece stocker 71 has a shelf structure on which workpiece W can be placed. Hand stocker 81 is a device for storing various hands, such as a workpiece hand 310 and a teaching hand 710, which will be described later. Hand stocker 81 has a shelf structure on which various hands can be placed.

Workpiece stocker 71 and hand stocker 81 are provided between machine tool 10S and machine tool 10T in the circumferential direction about swivel center axis 101. Workpiece stocker 71 and hand stocker 81 are positioned so as to face pallet stocker 31 (31S, 31T) with robot base 22 in between. Workpiece stocker 71 and hand stocker 81 are provided side by side in the upward-downward direction.

Setup station 61 is a device mainly for attaching and detaching workpiece W to and from pallet 410. Setup station 61 is equipped with a pallet placement base (not shown) on which pallet 410 can be placed. Setup station 61 is provided between workpiece stocker 71, hand stocker 81 and machine tool 10 in the circumferential direction about swivel center axis 101. Setup station 61 is provided adjacent to workpiece stocker 71 and hand stocker 81 in the circumferential direction about swivel center axis 101.

Setup station 61S and setup station 61T are provided on the opposite sides of workpiece stocker 71 and hand stocker 81 in the circumferential direction about swivel center axis 101.

The number of the devices such as machine tools 10, pallet stockers 31, workpiece stockers 71, hand stockers 81, and setup stations 61 included in transport system 100 is not particularly limited.

Transport system 100 further has a plurality of fences 56 (56h, 56i, 56j, 56k). Fences 56 rise from the floor of a plant or the like. In the top view shown in Fig. 1, fence 56h extends between machine tool 10S and pallet stocker 31S. In the top view shown in Fig. 1, fence 56i extends between pallet stocker 31T and machine tool 10T. In the top view shown in Fig. 1, fence 56j extends between machine tool 10T and setup station 61T. In the top view shown in Fig. 1, fence 56k extends between setup station 61S and machine tool 10S.

Robot 21 is disposed in a space 113 surrounded by the plurality of fences 56 (56h, 56i, 56j, 56k), machine tools 10 (10S, 10T), pallet stockers 31 (31S, 31T), workpiece stocker 71, hand stocker 81, and setup stations 61 (61S, 61T). The operating area of master hand 210, indicated by chain double-dashed line 111, is included in space 113.

The operator cannot access pallet stocker 31 from outside of space 113. The operator can load pallet 410 into pallet stocker 31 and retrieve pallet 410 from pallet stocker 31 through setup station 61. The operator can access workpiece stocker 71 and hand stocker 81 from outside of space 113. Through workpiece stocker 71, the operator can load a workpiece W yet to be machined into transport system 100 and retrieve a machined workpiece W' from transport system 100. Through hand stocker 81, the operator can load various hands into transport system 100 and retrieve the hands from transport system 100.

Transport system 100 further has a transport operation panel 51. Transport operation panel 51 includes a controller 610 that controls an operation of robot 21, a display unit 670 for displaying various types of information related to transport by robot 21, and an operation unit that accepts various operations for robot 21 (see Fig. 9, which will be referred to later). In the present embodiment, display unit 670 is configured as a touch panel display that can be operated by the operator, and is in charge of some of the functions of the operation unit. The operation unit may be configured as various buttons that can be pressed, numeric keys that can receive input of numbers, a dial, or the like.

Transport operation panel 51 is attached to workpiece stocker 71 and hand stocker 81. The position at which transport operation panel 51 is provided is not particularly limited.

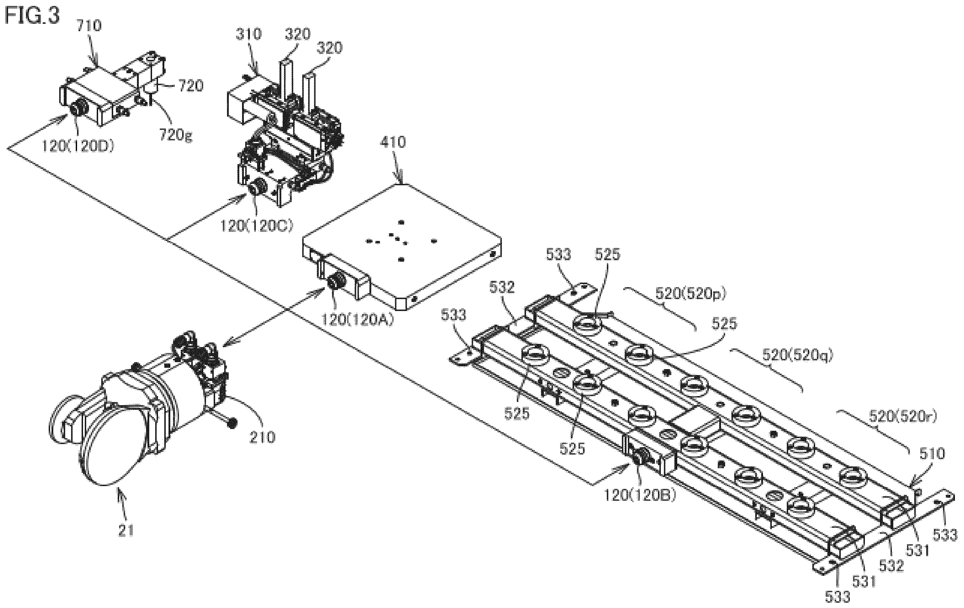

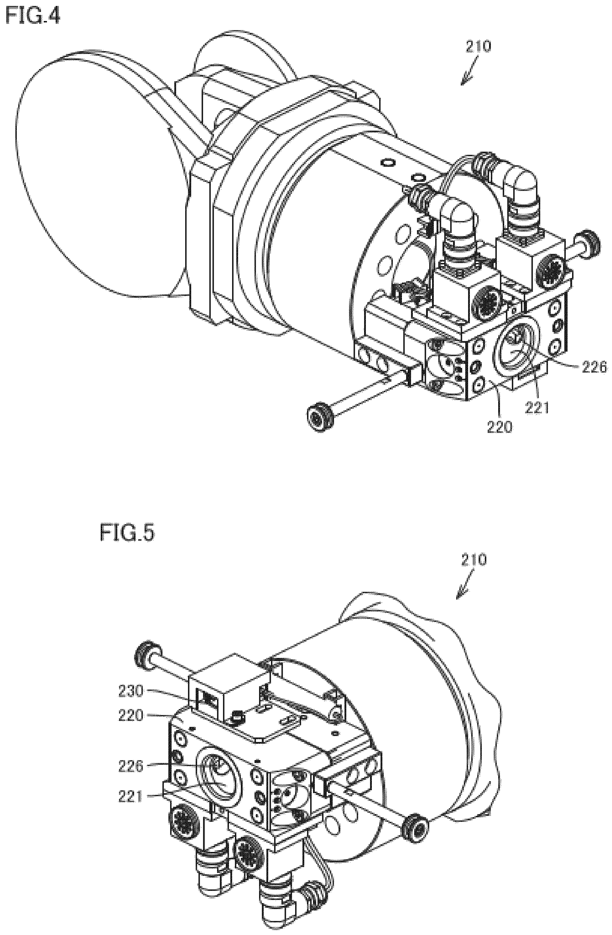

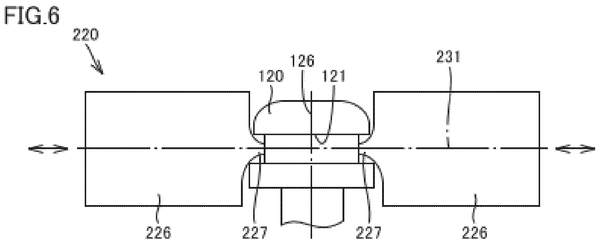

Fig. 3 is a perspective view showing the relationship of the pallet, workpiece hand, shelf plate, and teaching hand to the master hand. Figs. 4 and 5 are perspective views of the master hand. Fig. 6 is a view for illustrating the structure of the master hand.

Referring to Figs. 3 to 6, master hand 210 has a clamp mechanism 220. Clamp mechanism 220 is configured to be operable between a clamped state in which a grip portion 120 is held and an unclamped state in which grip portion 120 is released.

As shown in Figs. 4 to 6, grip portion 120 has a grip shape that is centered on a central axis 126. Grip portion 120 has a groove portion 121. Groove portion 121 has a groove shape that is recessed from the outer circumferential surface of grip portion 120 and goes around central axis 126.

Clamp mechanism 220 has the external appearance of a block body. Clamp mechanism 220 has a grip insertion hole 221. Grip insertion hole 221 is open in one direction.

Clamp mechanism 220 is formed of a cylinder piston. Clamp mechanism 220 has a pair of pistons 226. The pair of pistons 226 extend in a shaft shape along a central axis 231 that is orthogonal to central axis 126 and intersects grip insertion hole 221. The pair of pistons 226 face, while being spaced apart from, each other in the axial direction of central axis 231. The pair of pistons 226 are slidably supported in the axial direction of central axis 126. A protrusion 227, which is engageable with groove portion 121, is provided at the tip of each piston 226.

When grip portion 120 is gripped by master hand 210, master hand 210 is positioned such that clamp mechanism 220 faces grip portion 120. Grip portion 120 is inserted into grip insertion hole 221 by moving master hand 210 linearly toward grip portion 120. Clamp mechanism 220 is operated from the unclamped state to the clamped state by sliding the pair of pistons 226 toward each other by supplying air pressure or the like. As a result, protrusions 227 of the pair of pistons 226 advance into grip insertion hole 221 and engage with groove portion 121.

When master hand 210 releases grip portion 120, clamp mechanism 220 is operated from the clamped state to the unclamped state by sliding the pair of pistons 226 away from each other. This causes protrusions 227 of the pair of pistons 226 to exit from grip insertion hole 221 and come out of groove portion 121. Grip portion 120 is removed from grip insertion hole 221 by linearly moving master hand 210 away from grip portion 120.

As shown in Fig. 5, transport system 100 further has a sensor 230. Sensor 230 can detect the presence or absence of an object, and is, for example, a non-contact photoelectric sensor. Sensor 230 may be a proximity sensor or a contact sensor such as a limit switch.

Sensor 230 is mounted in robot 21. Sensor 230 is mounted in master hand 210. When sensor 230 is a photoelectric sensor, the direction of emission of light from sensor 230 may be parallel to the direction in which grip portion 120 advances or exits to and from master hand 210.

Referring to Fig. 3, transport system 100 further has pallet 410 for holding a workpiece. Transport system 100 has a plurality of pallets 410.

Pallet 410 is formed of a metal plate member and has an approximately rectangular shape in top view. The table of machine tool 10 has a built-in clamp mechanism for gripping pallet 410. A jig such as an equerre or a clamping device is attached onto pallet 410, and a workpiece is held by pallet 410 with the jig in between.

Pallet 410 has a first grip portion 120A. First grip portion 120A corresponds to the above-described grip portion 120 and is configured to be gripped by master hand 210. First grip portion 120A is provided on a side surface of pallet 410. First grip portion 120A is detachably provided to pallet 410.

As master hand 210 grips first grip portion 120A, robot 21 can transport pallet 410.

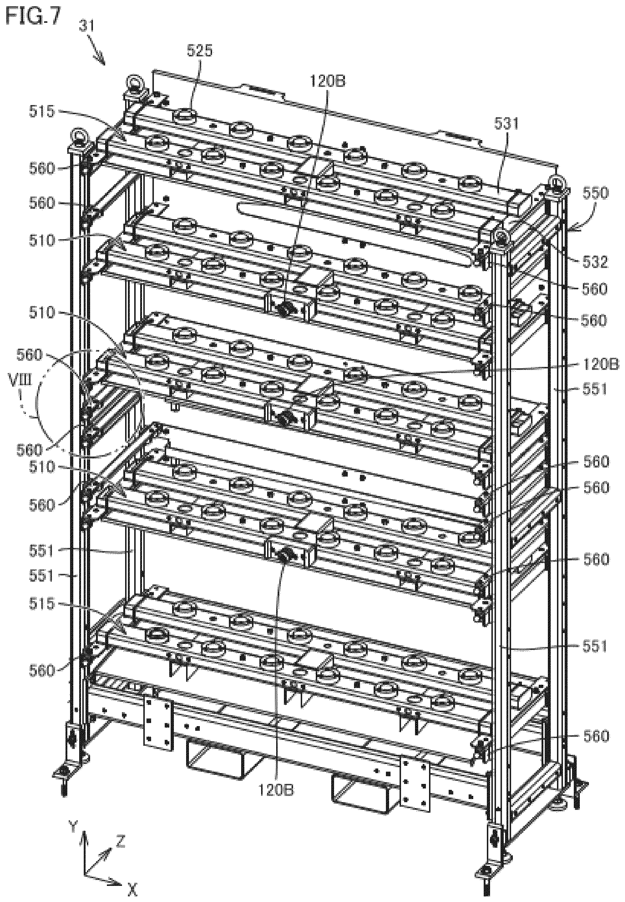

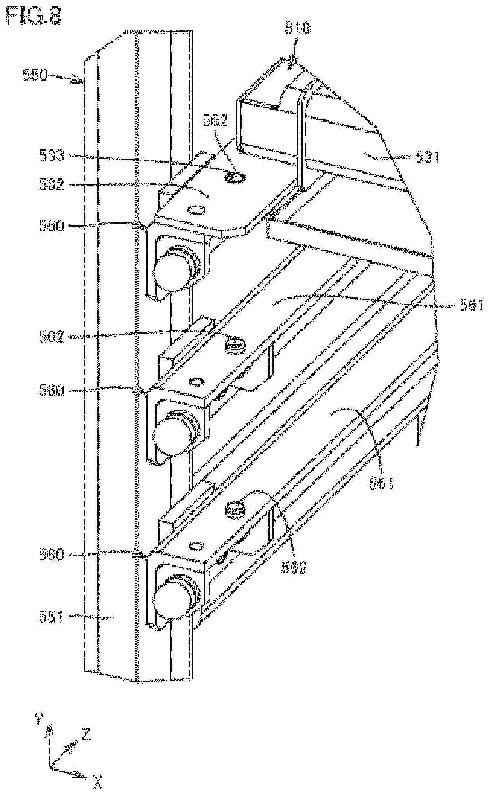

Fig. 7 is a perspective view of a pallet stocker in Fig. 1. Fig. 8 is a perspective view of the pallet stocker within the area enclosed by a chain double-dashed line VIII in Fig. 7.

In Figs. 7 and 8, and in other figures showing pallet stocker 31, the X-axis, Y-axis, and Z-axis, which are coordinate axes of pallet stocker 31, are shown. The X-axis extends in the horizontal direction corresponding to the width direction (left-right direction) of pallet stocker 31, the Y-axis extends in the upward-downward direction, and the Z-axis extends in the horizontal direction corresponding to the depth direction (forward-backward direction) of pallet stocker 31. The X-axis, the Y-axis, and the Z-axis are three axes orthogonal to one another.

Referring to Figs. 3, 7, and 8, pallet stocker 31 has a frame body 550, a plurality of support portions 560, and a plurality of shelf plates 510.

Frame body 550 forms a frame body of rectangular parallelepiped shape. Frame body 550 forms a frame body of rectangular parallelepiped shape with each direction of the X-axis direction and Y-axis direction as the longer direction and the Z-axis direction as the shorter direction. Frame body 550 has four pillars 551. The four pillars 551 are disposed at the four corners of frame body 550 in top view. Each pillar 551 extends in the Y-axis direction (upward-downward direction).

Support portion 560 is configured so as to support shelf plate 510. The plurality of support portions 560 are provided side by side while being spaced apart from each other in the upward-downward direction.

Support portion 560 has a pair of plates 561 on the left and right. The pair of plates 561 are spaced apart from each other in the X-axis direction. Plate 561 extends in the Z-axis direction while having an L-shaped cross-sectional shape when being cut along the X-axis-Y-axis plane. The opposite ends of plate 561 in the Z-axis direction are respectively connected to two pillars 551 provided side by side in the Z-axis direction.

Shelf plate 510 is configured to allow pallet 410 to be placed thereon. Shelf plate 510 has a rectangular shape with the X-axis direction as the longer direction and the Z-axis direction as the shorter direction in top view, and has a plate shape with the Y-axis direction as the thickness direction.

Shelf plate 510 has a pair of vertical frames 532 on the left and right, and a pair of horizontal frames 531 in the front and back. The pair of vertical frames 532 are spaced apart from each other in the X-axis direction. The pair of vertical frames 532 are respectively provided at the opposite ends of shelf plate 510 in the X-axis direction. Vertical frame 532 is formed of a plate member with the Y-axis direction as its thickness direction, and extends in the Z-axis direction. The pair of horizontal frames 531 are spaced apart from each other in the Z-axis direction. Horizontal frame 531 extends in the X-axis direction and is connected to the pair of vertical frames 532 respectively at the opposite ends.

As shown in Figs. 7 and 8, shelf plate 510 is supported by support portion 560. The pair of vertical frames 532 are placed on the pair of plates 561. The pair of vertical frames 532 bear the weight of shelf plate 510.

As shown in Fig. 8, support portion 560 further has a pin 562. Pin 562 is provided on plate 561. Pin 562 protrudes upward from the top surface of plate 561. Vertical frame 532 has a pin hole 533. Pin hole 533 is a through hole that penetrates vertical frame 532 in the Y-axis direction. Pin 562 is disposed in pin hole 533. This configuration prevents shelf plate 510 from being misaligned with support portion 560.

As shown in Fig. 3, shelf plate 510 further has a plurality of pallet support portions 520 (520p, 520q, 520r).

Each pallet support portion 520 is configured so as to support pallet 410. Each pallet support portion 520 is formed of four tapered cone receiving portions 525 that are spaced apart from each other side by side in the X-axis direction and Z-axis direction. Tapered cone receiving portions 525 are provided on horizontal frame 531. Tapered cone receiving portions 525 protrude upward from the top surface of horizontal frame 531. Tapered cone receiving portion 525 has such a recessed shape as to receive a tapered cone provided on the bottom surface of pallet 410.

Pallet support portion 520p, pallet support portion 520q, and pallet support portion 520r are provided side by side in the stated order in the X-axis direction.

Shelf plates 510 are compatible with placement of pallets 410 of different sizes. For example, shelf plates 510 are compatible with placement of pallets 410 of a size of 400 mm by 400 mm and placement of pallets 410 of a size of 500 mm by 500 mm. When pallets 410 have the size of 400 mm by 400 mm, three pallets 410 can be placed on shelf plate 510 using pallet support portion 520p, pallet support portion 520q, and pallet support portion 520r. When pallets 410 have the size of 500 mm by 500 mm, two pallets 410 can be placed on shelf plate 510 using pallet support portion 520p and pallet support portion 520r.

As shown in Figs. 3 and 7, shelf plate 510 has a second grip portion 120B. Second grip portion 120B corresponds to the above-described grip portion 120 and is configured to be gripped by master hand 210. Second grip portion 120B is provided at the center position of shelf plate 510 in the X-axis direction. Second grip portion 120B protrudes in the Z-axis direction from the front surface of shelf plate 510 (horizontal frame 531). Second grip portion 120B is provided below pallet support portion 520 (tapered cone receiving portion 525). Second grip portion 120B is detachably provided to shelf plate 510.

As master hand 210 grips second grip portion 120B, robot 21 can transport shelf plate 510. Robot 21 rearranges shelf plate 510 between the plurality of support portions 560 in pallet stocker 31.

As shown in Fig. 7, pallet stocker 31 further has a fixed shelf plate 515. Fixed shelf plate 515 basically has the same structure as that of shelf plate 510, but differs from shelf plate 510 in that it is not provided with second grip portion 120B. Fixed shelf plate 515 cannot be rearranged between the plurality of support portions 560, and its position in pallet stocker 31 is fixed.

Pallet stocker 31 has two fixed shelf plates 515. The two fixed shelf plates 515 are disposed at the top stage and the bottom stage of pallet stocker 31, respectively. Shelf plate 510 can be rearranged within the area in the upward-downward direction between fixed shelf plate 515 disposed at the top stage and fixed shelf plate 515 disposed at the bottom stage.

Referring to Fig. 3, workpiece hand 310 is configured to grip workpiece W. Workpiece hand 310 has a pair of gripping claws 320. The pair of gripping claws 320 face, while being spaced apart from, each other.

Workpiece hand 310 is configured to be operable between a clamped state in which workpiece W is gripped by the pair of gripping claws 320 and an unclamped state in which the pair of gripping claws 320 release workpiece W. By sliding the pair of gripping claws 320 toward each other, workpiece hand 310 is operated from the unclamped state to the clamped state. By sliding the pair of gripping claws 320 away from each other, workpiece hand 310 is operated from the clamped state to the unclamped state.

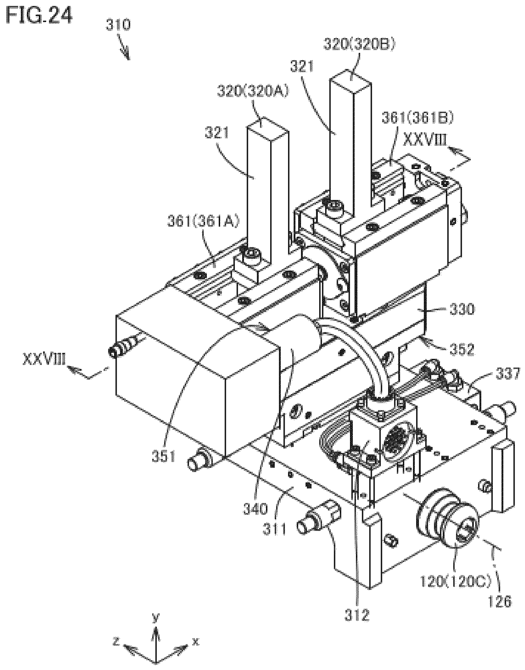

Workpiece hand 310 has a piston cylinder 330 and a servomotor 340 as a power source for sliding the pair of gripping claws 320 (see Figs. 9 and 24, which will be referred to later). The structure of workpiece hand 310 will be described later in detail.

Workpiece hand 310 further has a third grip portion 120C. Third grip portion 120C corresponds to the above-described grip portion 120 and is configured to be gripped by master hand 210. Third grip portion 120C has a grip shape extending in a direction orthogonal to the sliding direction of the pair of gripping claws 320. Third grip portion 120C is detachably provided to workpiece hand 310.

As master hand 210 grips third grip portion 120C, workpiece hand 310 can be attached to robot 21. Robot 21 can transport workpiece W using workpiece hand 310.

Teaching hand 710 has a touch probe 720. Teaching hand 710 is used for a teaching operation of robot 21 using touch probe 720.

Teaching hand 710 further has a fourth grip portion 120D. Fourth grip portion 120D corresponds to the above-described grip portion 120 and is configured to be gripped by master hand 210. Touch probe 720 has a pin-shaped contactor 720g that comes into contact with a measurement object. Fourth grip portion 120D has a grip shape extending in a direction orthogonal to the direction in which contactor 720g extends in a pin shape. Fourth grip portion 120D is detachably provided to teaching hand 710.

As master hand 210 grips fourth grip portion 120D, teaching hand 710 can be attached to robot 21.

First grip portion 120A, second grip portion 120B, third grip portion 120C, and fourth grip portion 120D have the same grip shape. Master hand 210 is configured to selectively grip any one grip portion 120 of first grip portion 120A, second grip portion 120B, third grip portion 120C, and fourth grip portion 120D.

Fig. 9 is a block diagram showing a control system of the transport system in Fig. 1. Referring to Fig. 9, transport system 100 further has a controller 610.

Each component of controller 610 is realized by hardware including a computing unit such as a central processing unit (CPU) and various computer processors, a storage device such as memory or storage, and wired or wireless communication lines that connect these, and software that is stored in the storage device and supplies processing instructions to the computing unit. The computer programs that make up the software may be composed of a device driver, an operating system, various application programs that are located at higher layers than these, or a library that provides common functions to these programs. The computer programs may be recorded in a computer-readable storage medium or in a non-transitory computer-readable storage medium. The computer programs may be included in a computer program product. Each block described below indicates a functional unit block.

Controller 610 has an operation acceptance unit 660 and a robot control unit 620. Operation acceptance unit 660 accepts, for example, an operator's operation through display unit 670 (operation unit) including a touch panel display. Operation acceptance unit 660 outputs a signal corresponding to the operator's operation to robot control unit 620.

Robot control unit 620 controls the operation of robot 21 (including the operation of workpiece hand 310 attached to master hand 210).

Robot control unit 620 has a program storage unit 621, a program analysis unit 622, an axis control unit 623, a hand control unit 624, and a parameter storage unit 625.

Program storage unit 621 stores various operation programs 641 that command the operations of robot 21. Operation programs 641 stored in program storage unit 621 include, for example, an operation command that defines the movement and stop of robot 21, a position command that defines the position and orientation (posture) of master hand 210, a path command that defines the movement path for linear movement, circular movement, or the like, and a speed command that defines the movement speed. Operation program 641 is input via an input/output device 630 connected to robot control unit 620 and is stored in program storage unit 621.

Operation program 641 is written in, for example, a language called standard language for industrial manipulators (SLIM). The specific position and orientation (posture) in each position command included in operation program 641 are obtained by operating robot 21 through a manual operation called teaching operation. As robot 21 is operated by the teaching operation, the rotation angle position of each driving servomotor 23 built in robot 21 is acquired as a parameter, and the acquired parameter is stored in parameter storage unit 625 via input/output device 630.

Program analysis unit 622 reads operation program 641, which is stored in program storage unit 621 and is to be executed, in response to a signal from operation acceptance unit 660. Program analysis unit 622 analyzes operation program 641 to extract a command related to movement, and transmits the command to axis control unit 623. Program analysis unit 622 analyzes operation program 641 to extract a command related to the hand operation, and transmits the command to hand control unit 624.

Axis control unit 623 controls the plurality of driving servomotors 23 in response to the command from program analysis unit 622. Hand control unit 624 controls master hand 210 and/or workpiece hand 310 in response to the command from program analysis unit 622.

Specifically, axis control unit 623 reads a parameter corresponding to each position command from parameter storage unit 625, generates a rotation command (control signal) for each driving servomotor 23 such that the rotational angle position of each driving servomotor 23 becomes the read rotational angle position, that the movement path of master hand 210 becomes the commanded movement path (linear movement or circular movement), and that master hand 210 moves at the commanded speed, and transmits the generated rotation command to each driving servomotor 23. The plurality of driving servomotors 23 move master hand 210 to the commanded position by being supplied with a driving current in response to the rotation command from axis control unit 623.

Hand control unit 624 generates an open/close command for the air valve such that the pair of pistons 226 slide in response to the command from program analysis unit 622, and transmits the open/close command to clamp mechanism 220. Hand control unit 624 generates an open/close command for the air valve such that the pair of gripping claws 320 slide in response to the command from program analysis unit 622, and transmits the open/close command to piston cylinder 330, or generates a rotation command (control signal) for servomotor 340 and transmits the rotation command to servomotor 340.

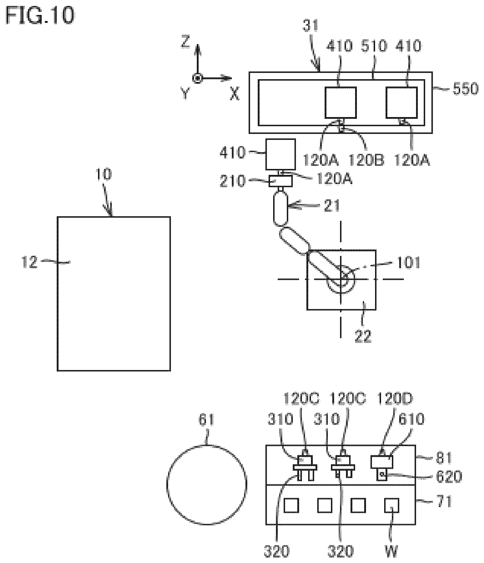

Next, a specific example of the manner of using robot 21 in transport system 100 will be described. Figs. 10 to 15 are top views showing the steps of workpiece machining using a workpiece stocker. Figs. 10 to 15 correspond to Fig. 2.

Referring to Fig. 2, in the initial state, a plurality of pallets 410 are stored in pallet stocker 31. The jig (not shown) such as an equerre or a clamp device is mounted on pallet 410. Workpieces W yet to be machined are stored in workpiece stocker 71. A plurality of workpiece hands 310 and teaching hand 710 are stored in hand stocker 81. Workpiece hand 310 may have a pair of gripping claws 320 having a shape or size different among the plurality of workpiece hands 310.

Referring to Figs. 9 and 10, controller 610 (robot control unit 620) controls robot 21 such that master hand 210 grips first grip portion 120A of pallet 410 stored in pallet stocker 31.

In this step, master hand 210 moves toward pallet stocker 31 and is positioned in the Z-axis direction so as to face first grip portion 120A of pallet 410. First grip portion 120A is inserted into grip insertion hole 221 as master hand 210 moves in the Z-axis direction. Master hand 210 grips first grip portion 120A. Pallet 410 is lifted from shelf plate 510 as master hand 210 moves upward.

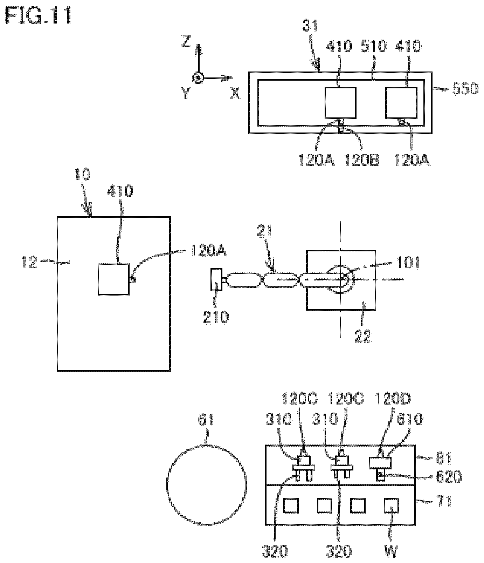

Referring to Figs. 9 and 11, then, controller 610 (robot control unit 620) controls robot 21 such that pallet 410 gripped by master hand 210 moves to machining area 12 of machine tool 10.

In this step, master hand 210 enters machining area 12 and places pallet 410 on a table (not shown). Pallet 410 is held on the table by a clamp mechanism built in the table. Master hand 210 releases first grip portion 120A and exits from machining area 12.

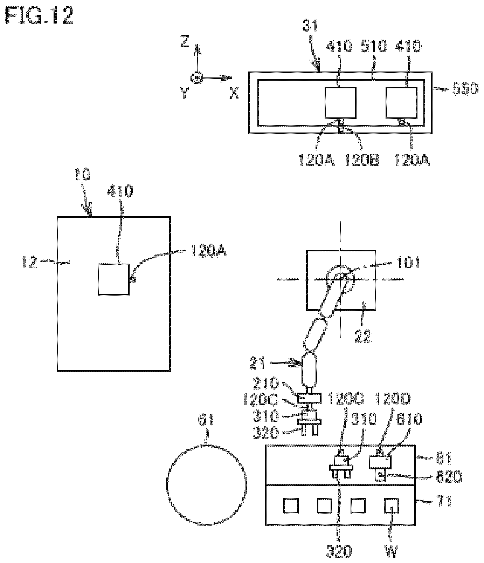

Referring to Figs. 9 and 12, then, controller 610 (robot control unit 620) controls robot 21 such that master hand 210 grips third grip portion 120C of workpiece hand 310 stored in hand stocker 81.

In this step, master hand 210 moves toward hand stocker 81. Workpiece hand 310 is attached to robot 21 as master hand 210 grips third grip portion 120C.

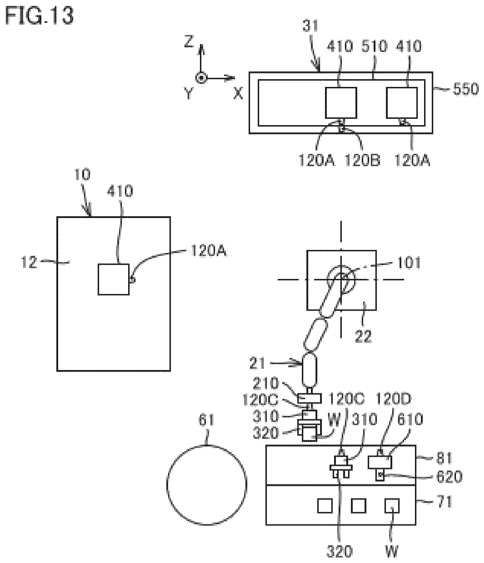

Referring to Figs. 9 and 13, then, controller 610 (robot control unit 620) controls robot 21 and workpiece hand 310 such that workpiece hand 310 grips workpiece W.

In this step, workpiece hand 310 moves toward workpiece stocker 71. Workpiece hand 310 grips workpiece W yet to be machined.

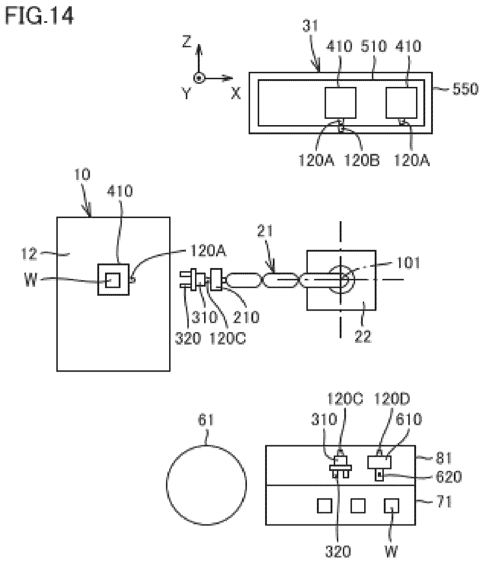

Referring to Figs. 9 and 14, then, controller 610 (robot control unit 620) controls robot 21 and workpiece hand 310 such that workpiece W gripped by workpiece hand 310 is held by pallet 410 disposed in machining area 12 of machine tool 10.

In this step, workpiece hand 310 enters machining area 12 and disposes workpiece W on the jig on pallet 410. The jig holds workpiece W, and workpiece hand 310 releases workpiece W. Workpiece hand 310 exits from machining area 12. Subsequent to this step, machine tool 10 machines workpiece W in machining area 12.

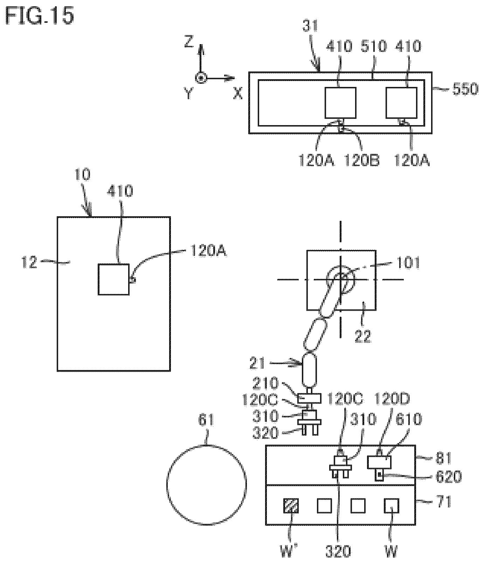

Referring to Figs. 9 and 15, then, controller 610 (robot control unit 620) controls robot 21 and workpiece hand 310 such that a machined workpiece W' is stored in workpiece stocker 71.

In this step, workpiece hand 310 enters machining area 12. Workpiece hand 310 grips machined workpiece W', and the jig on pallet 410 releases workpiece W'. Workpiece hand 310 gripping workpiece W' exits from machining area 12 and moves toward workpiece stocker 71. Workpiece hand 310 disposes workpiece W' in workpiece stocker 71 and releases workpiece W'. The above steps complete the workpiece machining using workpiece stocker 71.

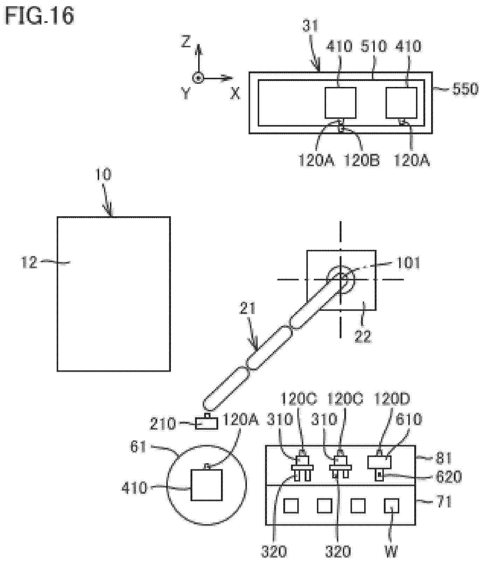

Figs. 16 to 20 are top views showing the steps of workpiece machining using a setup station. Figs. 16 to 20 correspond to Fig. 2.

Referring to Fig. 2, the initial state is similar to that of the workpiece machining using workpiece stocker 71 described above.

Referring to Figs. 9 and 16, controller 610 (robot control unit 620) controls robot 21 such that master hand 210 grips first grip portion 120A of pallet 410 stored in pallet stocker 31. Controller 610 (robot control unit 620) controls robot 21 such that pallet 410 gripped by master hand 210 moves to setup station 61.

In this step, master hand 210 moves toward setup station 61 and places pallet 410 on a pallet placement base (not shown) installed in setup station 61. Master hand 210 releases first grip portion 120A. Master hand 210 exits from setup station 61.

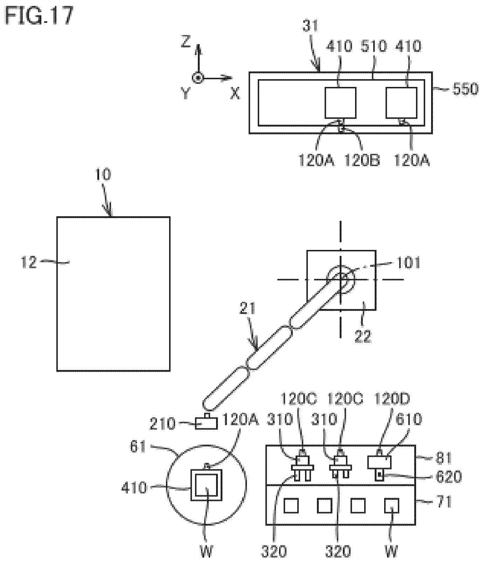

Referring to Figs. 9 and 17, then, the operator sets workpiece W with respect to pallet 410. In this step, workpiece W yet to be machined is held with respect to pallet 410 using the jig on pallet 410.

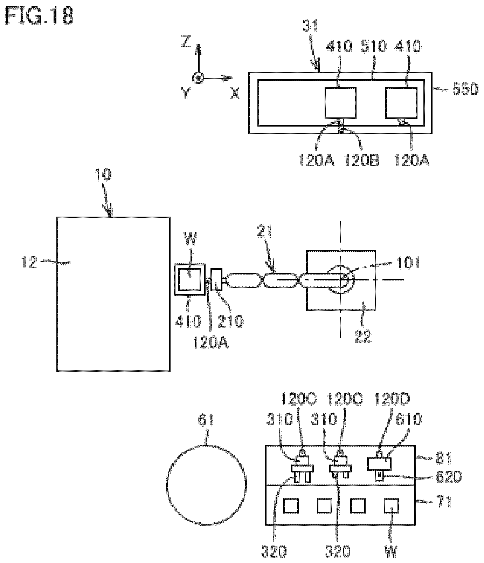

Referring to Figs. 9 and 18, then, controller 610 (robot control unit 620) controls robot 21 such that master hand 210 grips first grip portion 120A of pallet 410 disposed in setup station 61.

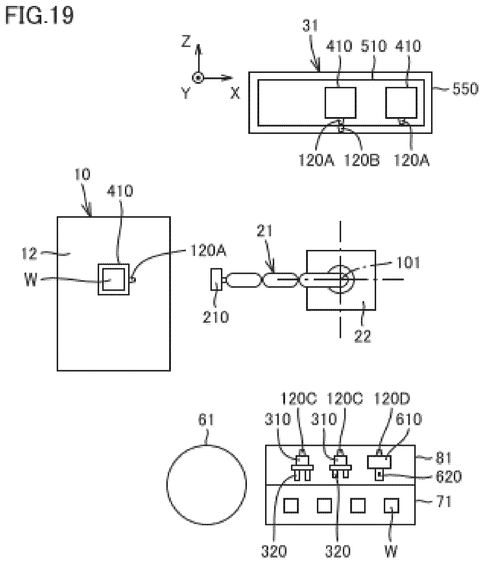

Referring to Figs. 9 and 19, then, controller 610 (robot control unit 620) controls robot 21 such that pallet 410 gripped by master hand 210 moves to machining area 12. Subsequent to this step, machine tool 10 machines workpiece W in machining area 12.

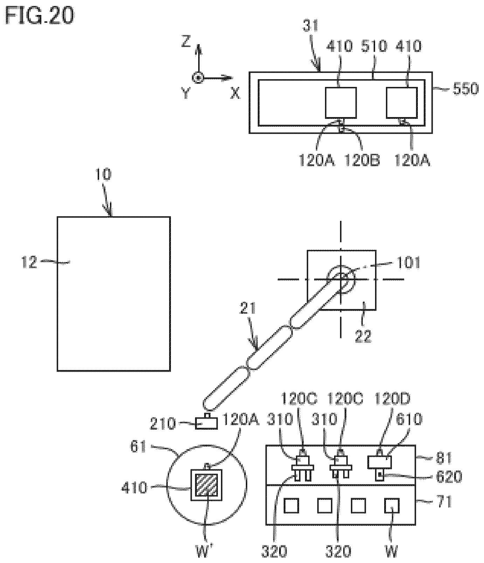

Referring to Figs. 9 and 20, then, controller 610 (robot control unit 620) controls robot 21 such that master hand 210 grips first grip portion 120A of pallet 410 disposed in machining area 12. Controller 610 (robot control unit 620) controls robot 21 such that pallet 410 gripped by master hand 210 moves to setup station 61. Subsequent to this step, the operator removes the machined workpiece W' from the jig on pallet 410. The above steps complete the workpiece machining using setup station 61.

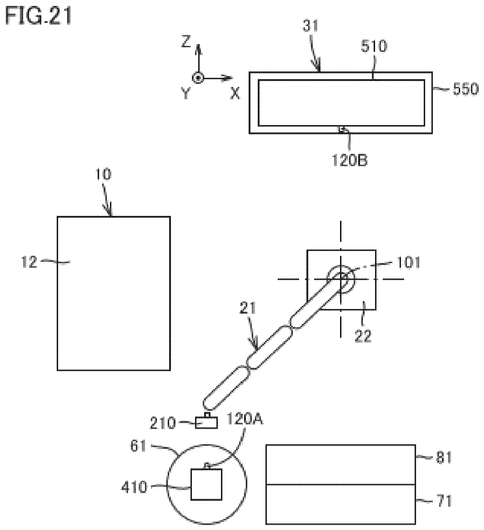

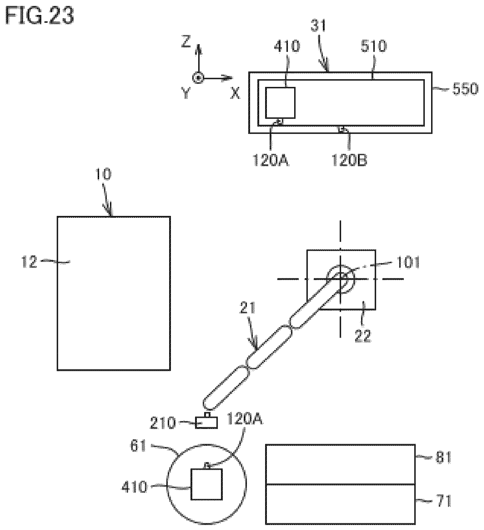

Figs. 21 to 23 are top views showing the steps of loading a pallet into a pallet stocker. Figs. 21 to 23 correspond to Fig. 2.

Referring to Figs. 9 and 21, in the initial state, pallet 410 is not stored in pallet stocker 31. The operator places pallet 410 on the pallet placement base (not shown) in setup station 61.

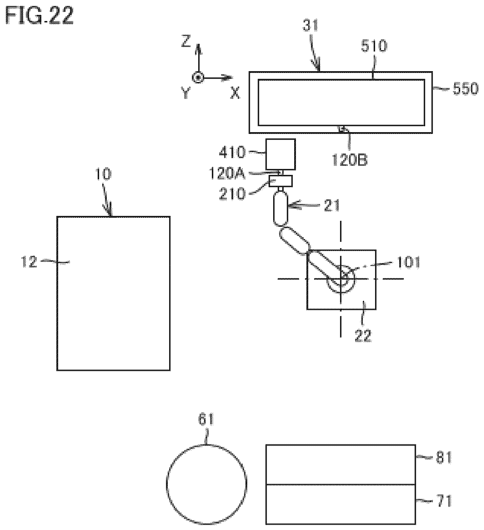

Referring to Figs. 9 and 22, controller 610 (robot control unit 620) controls robot 21 such that master hand 210 grips first grip portion 120A of pallet 410 disposed in setup station 61. Controller 610 (robot control unit 620) controls robot 21 such that pallet 410 gripped by master hand 210 moves to pallet stocker 31.

Referring to Figs. 9 and 22, then, controller 610 (robot control unit 620) controls robot 21 to place pallet 410 gripped by master hand 210 on shelf plate 510.

By repeating the above steps, the plurality of pallets 410 can be loaded into pallet stocker 31.

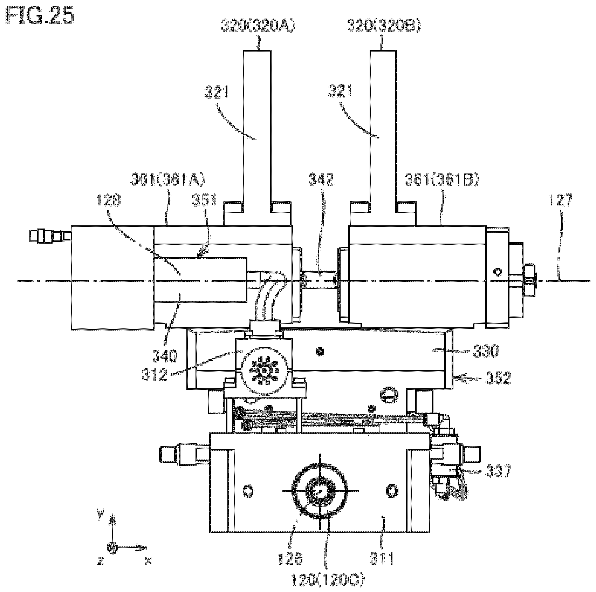

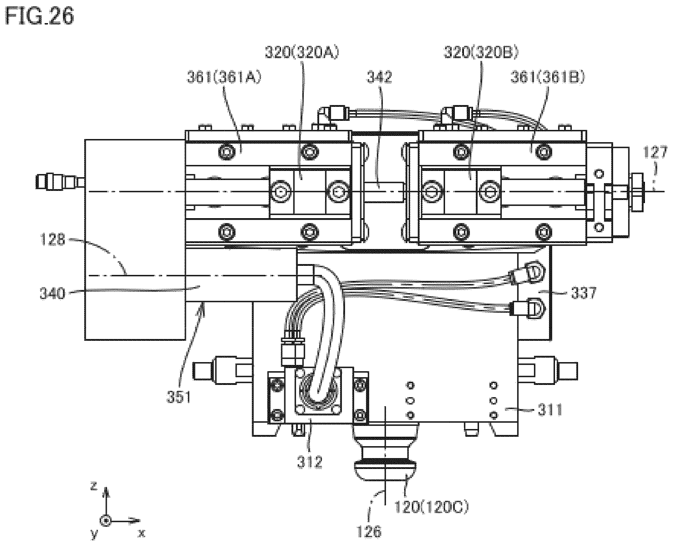

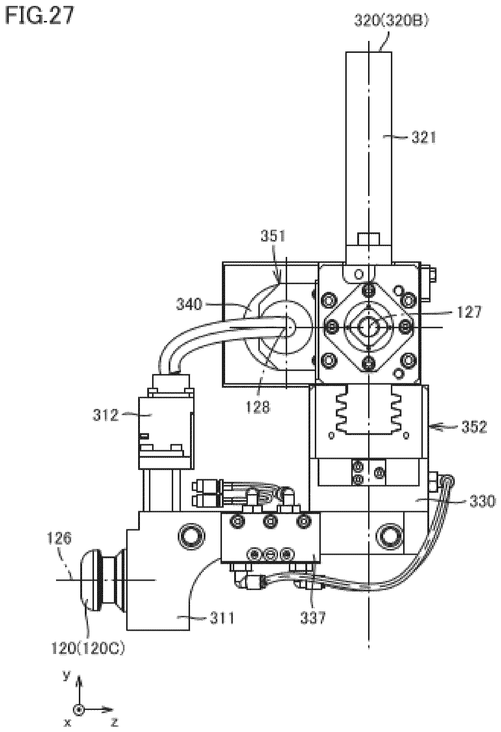

Next, the structure of workpiece hand 310 will be described in detail. Fig. 24 is a perspective view of the workpiece hand. Fig. 25 is a front view of the workpiece hand in Fig. 24. Fig. 26 is a top view of the workpiece hand in Fig. 24. Fig. 27 is a side view of the workpiece hand in Fig. 24.

In Figs. 24 to 27 and Figs. 28 to 34, which will be referred to later, coordinate axes consisting of an x-axis, a y-axis, and a z-axis are shown for convenience in describing the structure of workpiece hand 310. The x-axis extends in the sliding direction of gripping claw 320, the y-axis extends in the extension direction of gripping claw 320, which is orthogonal to the x-axis, and the z-axis extends in a direction orthogonal to each axis of the x-axis and the y-axis.

Referring to Figs. 24 to 27, workpiece hand 310 includes a first gripping claw 320A and a second gripping claw 320B as the pair of gripping claws 320.

Each gripping claw 320 of first gripping claw 320A and second gripping claw 320B extends in the y-axis direction. First gripping claw 320A and second gripping claw 320B face each other while being spaced apart from each other in the x-axis direction. Workpiece hand 310 is configured to grip workpiece W between first gripping claw 320A and second gripping claw 320B.

Workpiece hand 310 has a first drive mechanism 351 and a second drive mechanism 352. First drive mechanism 351 has servomotor 340 described above. First drive mechanism 351 causes first gripping claw 320A and second gripping claw 320B to slide along the x-axis direction, using an output from servomotor 340 as a driving force. Second drive mechanism 352 has piston cylinder 330 described above. Second drive mechanism 352 causes first gripping claw 320A and second gripping claw 320B to slide along the x-axis direction, using an output from piston cylinder 330 as a driving force.

The present invention may also have a configuration in which one of the first gripping claw and the second gripping claw slides while the other of the first gripping claw and the second gripping claw remains stationary. Further, the object gripped by the first gripping claw and the second gripping claw is not limited to a workpiece and may also be, for example, a tool or a jig for holding a workpiece or a tool.

Workpiece hand 310 further has a support base 311. Support base 311 is configured as a plate member as a whole which is arranged parallel to the x-axis-z-axis plane, with the y-axis direction corresponding to the thickness direction. Support base 311 supports the pair of gripping claws 320, first drive mechanism 351, and second drive mechanism 352. Third grip portion 120C is connected to support base 311. Third grip portion 120C is detachably attached to support base 311. Third grip portion 120C has a grip shape centered on central axis 126. Central axis 126 extends in the z-axis direction.

In a side view as viewed in the x-axis direction shown in Fig. 27, the pair of gripping claws 320 are provided at positions offset in the z-axis direction and the y-axis direction from third gripping portion 120C. First drive mechanism 351 is disposed between the pair of gripping claws 320 and second drive mechanism 352 in the y-axis direction. In the top view as viewed in the y-axis direction shown in Fig. 26, third grip portion 120C is provided at the center position between first gripping claw 320A and second gripping claw 320B in the x-axis direction.

Support base 311 is further provided with a connector 312 or the like for detachably connecting various wires and pipes between robot 21 (master hand 210) and workpiece hand 310, and an air valve 337 for controlling a supply of air to piston cylinder 330.

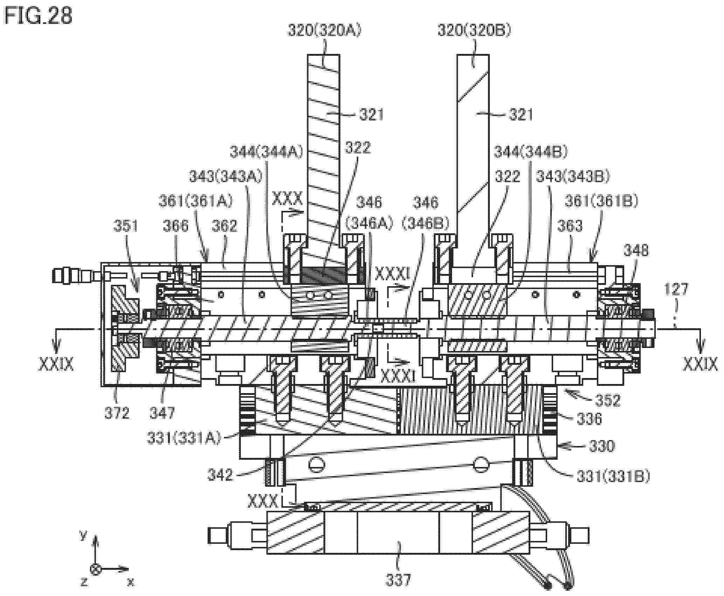

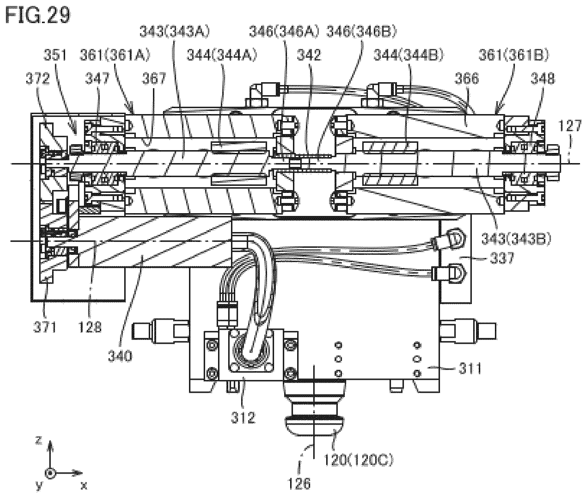

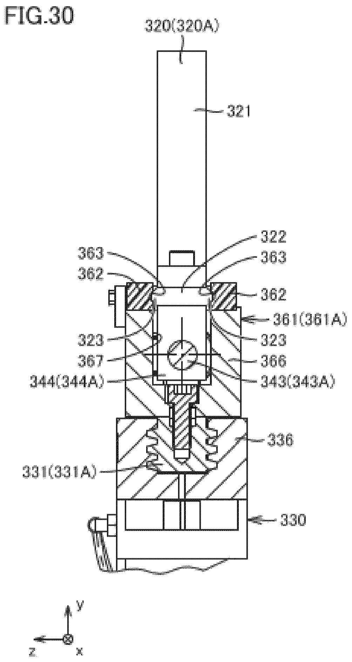

Fig. 28 is a sectional view of the workpiece hand as viewed in the direction of an arrow XXVIII-XXVIII in Fig. 24. Fig. 29 is a sectional view of the workpiece hand as viewed in the direction of an arrow XXIX-XXIX in Fig. 28. Fig. 30 is a sectional view of the workpiece hand as viewed in the direction of an arrow XXX-XXX in Fig. 28.

Referring to Figs. 24 to 30, workpiece hand 310 has a first slide body 361A and a second slide body 361B (hereinafter, first slide body 361A and second slide body 361B will be referred to as "slide body 361" when they are not specifically distinguished).

First slide body 361A and second slide body 361B are spaced apart from each other in the x-axis direction. First slide body 361A supports first gripping claw 320A in a slidable manner along the x-axis direction. Second slide body 361B supports second gripping claw 320B in a slidable manner along the x-axis direction.

As shown in Figs. 28 and 30, gripping claw 320 has a claw body portion 321 and a base portion 322. Base portion 322 is a portion supported by slide body 361. Base portion 322 has a pair of protruding portions 323. The pair of protrusions 323 are provided respectively at the opposite ends of base portion 322 in the z-axis direction. Each protrusion 323 has a protruding shape protruding in the z-axis direction. Claw body portion 321, which is the body portion of gripping claw 320 that grips workpiece W, extends in the y-axis direction from base portion 322.

Slide body 361 has a slide body portion 366 and a guide portion 362. Slide body portion 366 is a portion to which a driving force from second drive mechanism 352 is applied. Guide portion 362 is a portion that guides gripping claw 320. Guide portion 362 is connected to an end of slide body portion 366 in the y-axis direction.

A groove portion 367 is provided in slide body 361. Groove portion 367 extends in the x-axis direction while forming a recessed shape that is open in one direction along the y-axis direction, with the y-axis direction corresponding to the depth direction. Groove portion 367 penetrates guide portion 362 in the y-axis direction, enters slide body portion 366, and forms a groove bottom inside slide body portion 366.

A pair of guide grooves 363 are provided in guide portion 362. Guide portion 362 has a pair of inner walls that face each other in the z-axis direction and respectively form the opposite side walls of groove portion 367. Each of the pair of guide grooves 363 extends in the x-axis direction while forming a recessed shape that recesses in the z-axis direction from a corresponding one of the pair of inner walls. The pair of protrusions 323 are respectively fitted with the pair of guide grooves 363.

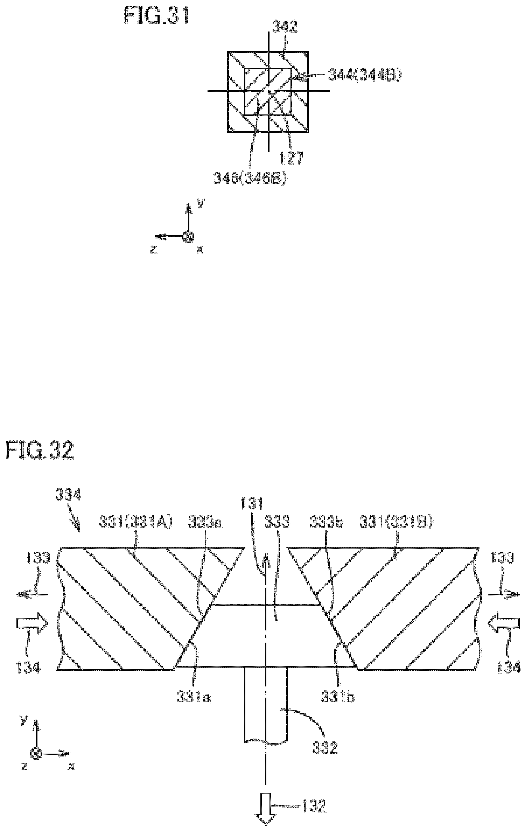

Fig. 31 is a sectional view of the workpiece hand as viewed in the direction of an arrow XXXI-XXXI in Fig. 28.

Referring to Figs. 28 to 31, first drive mechanism 351 further has a first screw 343A and a second screw 343B (hereinafter, first screw 343A and second screw 343B will be referred to as "screw 343" when they are not specifically distinguished).

Screw 343 extends along a predetermined axis 127. Predetermined axis 127 is an imaginary straight line extending in the x-axis direction and corresponds to the rotation center of screw 343. A thread (external thread) extending spirally around predetermined axis 127 is provided on the outer peripheral surface of screw 343. The thread provided on first screw 343A and the thread provided on second screw 343B are oriented in reverse directions in the circumferential direction of predetermined axis 127.

First screw 343A is supported by first slide body 361A to be rotatable about predetermined axis 127. First screw 343A is supported by first slide body 361A via a bearing 347. First screw 343A is disposed in groove portion 367 of first slide body 361A. First screw 343A receives a rotational motion from servomotor 340.

Servomotor 340 is configured to output rotational motions in the forward direction and the reverse direction around a central axis 128. Central axis 128 is an imaginary straight line extending in the x-axis direction and corresponds to the rotation center of the rotational motion output from servomotor 340. Central axis 128 is spaced apart from predetermined axis 127 in the z-axis direction. Servomotor 340 is positioned so as to face first screw 343A in the z-axis direction.

First drive mechanism 351 further has a first gear 371 and a second gear 372. First gear 371 is disposed around central axis 128. First gear 371 is connected to the output shaft of servomotor 340. Second gear 372 is disposed around predetermined axis 127. Second gear 372 is connected to an end of first screw 343A in the x-axis direction. Second gear 372 meshes with first gear 371. The rotational motion from servomotor 340 is transmitted to first screw 343A via first gear 371 and second gear 372.

Second screw 343B is aligned with first screw 343A in the x-axis direction. Second screw 343B is supported by second slide body 361B to be rotatable about predetermined axis 127. Second screw 343B is supported by second slide body 361B via a bearing 348. Second screw 343B is disposed in groove portion 367 of second slide body 361B.

First drive mechanism 351 further has a first nut 344A and a second nut 344B (hereinafter, first nut 344A and second nut 344B will be referred to as "nut 344" when they are not specifically distinguished).

First nut 344A is threaded onto first screw 343A. First nut 344A is connected to first gripping claw 320A. First nut 344A slides in the x-axis direction integrally with first gripping claw 320A. Second nut 344B is screwed onto second screw 343B. Second nut 344B is connected to second gripping claw 320B. Second nut 344B slides in the x-axis direction integrally with second gripping claw 320B.

Nut 344 is provided integrally with base portion 322 of gripping claw 320. Nut 344 is provided opposite to claw body portion 321 relative to base portion 322 in the y-axis direction. First nut 344A is disposed in groove portion 367 of first slide body 361A. First nut 344A is slidably supported in the x-axis direction by the inner wall of first slide body 361A forming groove portion 367. First nut 344A is paired with first screw 343A to form a ball screw. Second nut 344B is disposed in groove portion 367 of second slide body 361B. Second nut 344B is slidably supported in the x-axis direction by the inner wall of second slide body 361B forming groove portion 367. Second nut 344B is paired with second screw 343B to form a ball screw.

First drive mechanism 351 further has a coupling portion 342. Coupling portion 342 couples first screw 343A to second screw 343B. Coupling portion 342 is configured to regulate relative rotation of first screw 343A and second screw 343B about predetermined axis 127 and to permit relative sliding of first screw 343A and second screw 343B in the axial direction of predetermined axis 127.

As coupling portion 342 regulates relative rotation of first screw 343A and second screw 343B about predetermined axis 127, a rotational motion of first screw 343A about predetermined axis 127 is transmitted to second screw 343B during sliding of first gripping claw 320A and second gripping claw 320B by first drive mechanism 351.

As coupling portion 342 permits relative sliding of first screw 343A and second screw 343B in the axial direction of predetermined axis 127, relative sliding of first slide body 361A and second slide body 361B in the axial direction of predetermined axis 127 is enabled during sliding of first gripping claw 320A and second gripping claw 320B by second drive mechanism 352.

More specifically, first screw 343A and second screw 343B have a first tip 346A and a second tip 346B, respectively (hereinafter, first tip 346A and second tip 346B will be referred to as "tip 346" when they are not specifically distinguished).

Tip 346 is an end of screw 343 in the x-axis direction and extends along predetermined axis 127. First tip 346A and second tip 346B face, while being spaced apart from, each other in the x-axis direction. When cut along a plane orthogonal to predetermined axis 127, tip 346 has a non-circular cross-sectional shape. When cut along a plane orthogonal to predetermined axis 127, tip 346 has a rectangular cross-sectional shape.

Tip 346 may have a polygonal cross-sectional shape other than a rectangular shape when cut along a plane orthogonal to predetermined axis 127. Tip 346 may be formed of a spline shaft having a plurality of teeth arranged in the circumferential direction of predetermined axis 127, each tooth extending in the axial direction of predetermined axis 127.

Coupling portion 342 is formed of a cylindrical body extending in the x-axis direction. Coupling portion 342 has an opening shape corresponding to the cross-sectional shape of tip 346 when cut along a plane orthogonal to predetermined axis 127. When cut along a plane orthogonal to predetermined axis 127, coupling portion 342 has a rectangular opening shape. First tip 346A is fitted with one end of coupling portion 342 in the x-axis direction. Second tip 346B is fitted with the other end of coupling portion 342 in the x-axis direction.

Tip 346 is slidable in the x-axis direction while being fitted with coupling portion 342. Tip 346 is not rotatable relative to coupling portion 342 about predetermined axis 127 while being fitted with coupling portion 342.

In this configuration, during driving of first drive mechanism 351, as the rotational motion in the forward direction from servomotor 340 is transmitted to first screw 343A via first gear 371 and second gear 372, first screw 343A and second screw 343B, which is coupled to first screw 343A by coupling portion 342, rotate in one direction about predetermined axis 127. At this time, the thread provided on first screw 343A and the thread provided on second screw 343B are oriented in reverse directions in the circumferential direction of predetermined axis 127, and thus, first nut 344A and second nut 344B move toward each other in the x-axis direction. As a result, first gripping claw 320A and second gripping claw 320B slide toward each other in the x-axis direction.

Further, when a reverse rotational motion from servomotor 340 is transmitted to first screw 343A via first gear 371 and second gear 372, first screw 343A and second screw 343B, which is coupled to first screw 343A by coupling portion 342, rotate in reverse directions about predetermined axis 127. At this time, first nut 344A and second nut 344B move away from each other in the x-axis direction. As a result, first gripping claw 320A and second gripping claw 320B slide away from each other in the x-axis direction.

During sliding of first gripping claw 320A and second gripping claw 320B by servomotor 340, first slide body 361A and second slide body 361B remain stationary in the x-axis direction.

Fig. 32 is a sectional view showing the internal structure of the piston cylinder in Fig. 28. Referring to Figs. 28, 30, and 32, second drive mechanism 352 causes first slide body 361A and second slide body 361B to slide in the x-axis direction. At this time, first gripping claw 320A slides in the x-axis direction integrally with first slide body 361A, and second gripping claw 320B slides in the x-axis direction integrally with second slide body 361B.

Piston cylinder 330 is supported by support base 311. Piston cylinder 330 is disposed between support base 311 and slide body 361 in the y-axis direction. Gripping claw 320 (claw body portion 321) extends in the y-axis direction from slide body 361 to the side opposite to piston cylinder 330. Piston cylinder 330 is spaced apart from coupling portion 342 radially outward of predetermined axis 127.

Piston cylinder 330 has a piston 332 and a power transmission portion 334. Piston 332 performs a linear motion (reciprocating motion) along the y-axis direction. Piston cylinder 330 is an air-based one that operates piston 332 by air pressure. Power transmission portion 334 converts the linear motion along the y-axis direction from piston 332 into a linear motion along the x-axis direction and transmits the converted linear motion to first slide body 361A and second slide body 361B.

Power transmission portion 334 has a first wedge block 331A and a second wedge block 331B (hereinafter, first wedge block 331A and second wedge block 331B will be referred to as "wedge block 331" when they are not specifically distinguished). First wedge block 331A and second wedge block 331B are spaced from each other in the x-axis direction. Wedge block 331 is supported to be slidable in the x-axis direction by guide block 336.

First wedge block 331A is connected to first slide body 361A. First wedge block 331A is fastened to slide body portion 366 of first slide body 361A with bolts. Second wedge block 331B is connected to second slide body 361B. Second wedge block 331B is fastened to slide body portion 366 of second slide body 361B with bolts.

First wedge block 331A has a first tapered surface 331a. Second wedge block 331B has a second tapered surface 331b. First tapered surface 331a and second tapered surface 331b face, while being spaced apart from, each other in the x-axis direction. First tapered surface 331a and second tapered surface 331b are inclined with respect to the y-axis such that the distance between first tapered surface 331a and second tapered surface 331b in the x-axis direction changes in the y-axis direction. The distance between first tapered surface 331a and second tapered surface 331b in the x-axis direction decreases with a smaller distance from slide body 361 in the y-axis direction and increases with a larger distance from slide body 361 in the y-axis direction.

Power transmission portion 334 further has a third wedge block 333. Third wedge block 333 is connected to the tip of piston 332 in the y-axis direction. Third wedge block 333 is disposed between first wedge block 331A and second wedge block 331B in the x-axis direction. First wedge block 331A and second wedge block 331B are biased against third wedge block 333 in the x-axis direction by the elastic force of a spring member (not shown).

Third wedge block 333 has a third tapered surface 333a and a fourth tapered surface 333b. Third tapered surface 333a is parallel to first tapered surface 331a. Third tapered surface 333a is in surface contact with first tapered surface 331a. Fourth tapered surface 333b is parallel to second tapered surface 331b. Fourth tapered surface 333b is in surface contact with second tapered surface 331b.

In this configuration, during driving of second drive mechanism 352, as piston 332 performs a linear motion away from sliding body 361 in the y-axis direction (as piston cylinder 330 performs contraction driving) as indicated by an arrow 132 in Fig. 32, first wedge block 331A and second wedge block 331B move toward each other in the x-axis direction, as indicated by an arrow 134 in Fig. 32. As a result, first gripping claw 320A and second gripping claw 320B slide toward each other in the x-axis direction.

Additionally, as piston 332 performs a linear motion toward slide body 361 in the y-axis direction (as piston cylinder 330 performs extension driving) as indicated by an arrow 131 in Fig. 32, first wedge block 331A and second wedge block 331B move away from each other in the x-axis, as indicated by an arrow 133 in Fig. 32. As a result, first gripping claw 320A and second gripping claw 320B slide away from each other in the x-axis direction.

During sliding of first gripping claw 320A and second gripping claw 320B by second drive mechanism 352 (piston cylinder 330), first gripping claw 320A and second gripping claw 320B remain stationary in the x-axis direction relative to first slide body 361A and second slide body 361B, respectively.

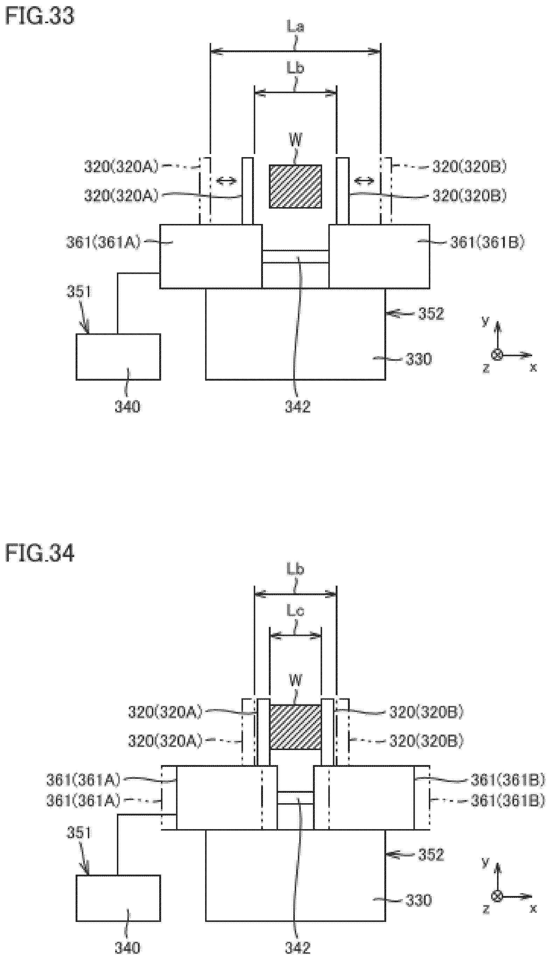

Fig. 33 schematically shows sliding of the first gripping claw and the second gripping claw by the first drive mechanism (servomotor). Fig. 34 schematically shows sliding of the first gripping claw and the second gripping claw by the second drive mechanism (piston cylinder).

Referring to Figs. 9, 33, and 34, the operator preliminarily inputs the width of workpiece W in the x-axis direction via display unit 670 (operation unit) formed of a touch panel display. The input width of workpiece W is stored in parameter storage unit 625. Parameter storage unit 625 further stores a stroke length St of piston cylinder 330 in second drive mechanism 352.

It is assumed in Figs. 33 and 34 that workpiece W having a width of a third length Lc is gripped by first gripping claw 320A and second gripping claw 320B. In the initial state, the distance between first gripping claw 320A and second gripping claw 320B in the x-axis direction is a first length La. First length La is greater than third length Lc (La > Lc).

First length La may be the maximum separation width between first gripping claw 320A and second gripping claw 320B. In this case, first length La depends on the specifications of workpiece hand 310 attached to robot 21.

Controller 610 (robot control unit 620) then controls robot 21 such that workpiece W is disposed between first gripping claw 320A and second gripping claw 320B.

Robot control unit 620 then reads third length Lc, which is the width of workpiece W, and a stroke length St of piston cylinder 330 from parameter storage unit 625. Robot control unit 620 calculates the sum of third length Lc and stroke length St of first gripping claw 320A and second gripping claw 320B by piston cylinder 330, and sets the calculated value as a second length Lb (Lb = Lc + St).

Second length Lb is smaller than first length La and greater than third length Lc (Lc < Lb < La). Stroke length St is the slide length of first wedge block 331A and second wedge block 331B in the x-axis direction, which depends on the specifications of piston cylinder 330. Stroke length St may be, for example, 10 mm or less, 5 mm or less, or 3 mm or less.

Controller 610 (robot control unit 620) then controls first drive mechanism 351 (servomotor 340) such that the distance between first gripping claw 320A and second gripping claw 320B in the x-axis direction changes from first length La to second length Lb.

In this step, as servomotor 340 in first drive mechanism 351 is driven, first gripping claw 320A and second gripping claw 320B slide toward each other.

Controller 610 (robot control unit 620) then controls second drive mechanism 352 (piston cylinder 330) such that the distance between first gripping claw 320A and second gripping claw 320B in the x-axis direction changes from second length Lb to third length Lc.

In this step, as piston cylinder 330 in second drive mechanism 352 performs contraction driving, first gripping claw 320A and second gripping claw 320B slide toward each other.

In the present embodiment, the slide length (St = Lb - Lc) of first gripping claw 320A and second gripping claw 320B by second drive mechanism 352 is smaller than the slide length (La - Lb) of first gripping claw 320A and second gripping claw 320B by first drive mechanism 351 (Lb - Lc < La - Lb). Depending on the dimensions of workpiece W, the slide length (St = Lb - Lc) of first gripping claw 320A and second gripping claw 320B by second drive mechanism 352 may be equal to or greater than the slide length (La - Lb) of first gripping claw 320A and second gripping claw 320B by first drive mechanism 351 (Lb - Lc ≥ La - Lb).

Further, when first gripping claw 320A and second gripping claw 320B release workpiece W, the steps for gripping workpiece W described above may be performed in reverse order.

The structure of workpiece hand 310 in the embodiment of the present invention described above is summarized as follows. Workpiece hand 310 as a hand device in the present embodiment includes: first gripping claw 320A; second gripping claw 320B facing first gripping claw 320A while being spaced apart therefrom and gripping workpiece W, which is an object, together with first gripping claw 320A; first drive mechanism 351 including servomotor 340, which is a motor, and causing at least one gripping claw 320 of first gripping claw 320A and second gripping claw 320B to slide, using an output from servomotor 340 as a driving force; and second drive mechanism 352 including air-type piston cylinder 330 and causing the at least one gripping claw 320 of first gripping claw 320A and second gripping claw 320B to slide, using an output from piston cylinder 330 as a driving force.

When it is assumed that workpiece hand 310 has only a motor as the power source for causing gripping claw 320 to slide, in this case, a sufficient grip force, by which gripping claw 320 grips workpiece W, may not be obtained due to a small thrust of the motor, or the motor may become significantly larger in size in order to obtain a sufficient grip force. In contrast, when it is assumed that workpiece hand 310 has only a piston cylinder as a power source for causing gripping claw 320 to slide, in this case, various workpieces W of different dimensions may not be gripped by one workpiece hand due to limitations on the stroke of the piston cylinder, resulting in a decrease in the versatility of the workpiece hand.

In contrast, in workpiece hand 310 in the present embodiment, first drive mechanism 351, which uses an output from servomotor 340 as a driving force, is used for sliding of gripping claw 320, thereby achieving a sufficient slide length of gripping claw 320. This enables gripping of various workpieces W of different dimensions without preparing a large number of workpiece hands 310. Further, the second drive mechanism, which uses an output from piston cylinder 330 as the driving force, is used for sliding of gripping claw 320, thereby achieving a sufficient grip force for workpiece W. This can more reliably prevent workpiece W from falling from workpiece hand 310.

When workpiece W is gripped by first gripping claw 320A and second gripping claw 320B, first drive mechanism 351 causes gripping claw 320 to slide such that the distance between first gripping claw 320A and second gripping claw 320B changes from first length La to second length Lb smaller than first length La, and second drive mechanism 352 causes gripping claw 320 to slide such that the distance between first gripping claw 320A and second gripping claw 320B changes from second length Lb to third length Lc smaller than second length Lb.

With this configuration, as second length Lb is adjusted according to the dimensions of workpiece W, first, first gripping claw 320A and second gripping claw 320B can be positioned relative to workpiece W by driving of first drive mechanism 351, and workpiece W can be gripped by first gripping claw 320A and second gripping claw 320B with a sufficient grip force by driving of second drive mechanism 352.

Further, the slide length (Lb - Lc) of first gripping claw 320A and second gripping claw 320B by second drive mechanism 352 is smaller than the slide length (La - Lb) of first gripping claw 320A and second gripping claw 320B by first drive mechanism 351.

With this configuration, by relatively reducing stroke length St (= Lb - Lc) of piston cylinder 330 when workpiece W is gripped, an excessively large force can be prevented from being applied to workpiece W from first gripping claw 320A and second gripping claw 320B. Consequently, damage to workpiece W can be prevented.

Workpiece hand 310 further includes: first slide body 361A that supports first gripping claw 320A in a slidable manner along the x-axis direction, which is the first direction, and is caused to slide in the x-axis direction by second drive mechanism 352; and second slide body 361B that supports second gripping claw 320B in a slidable manner along the x-axis direction and is caused to slide in the x-axis direction by second drive mechanism 352. First drive mechanism 351 includes: first screw 343A supported by first slide body 361A to be rotatable about predetermined axis 127 parallel to the x-axis direction, a rotational motion from servomotor 340 being input to first screw 343A; first nut 344A screwed onto first screw 343A and connected to first gripping claw 320A: second screw 343B supported by second slide body 361B to be rotatable about predetermined axis 127 and having a reverse thread with respect to a thread provided on first screw 343A; second nut 344B screwed onto second screw 343B and connected to second gripping claw 320B; and coupling portion 342 coupling first screw 343A to second screw 343B to regulate relative rotation of first screw 343A and second screw 343B about predetermined axis 127 and permit relative sliding of first screw 343A and second screw 343B in an axial direction of predetermined axis 127.

With this configuration, coupling portion 342 regulates relative rotation of first screw 343A and second screw 343B about predetermined axis 127, enabling transmission of a rotational motion around predetermined axis 127 between first screw 343A and second screw 343B during sliding of first gripping claw 320A and second gripping claw 320B by first drive mechanism 351. Further, coupling portion 342 permits relative sliding of first screw 343A and second screw 343B in the axial direction of predetermined axis 127, enabling relative sliding of first slide body 361A and second slide body 361B in the axial direction of predetermined axis 127 during sliding of first gripping claw 320A and second gripping claw 320B by second drive mechanism 352.

Further, piston cylinder 330 includes piston 332 that performs a linear motion along the y-axis direction, which is the second direction orthogonal to the x-axis direction, and power transmission portion 334 that converts the linear motion along the y-axis direction from piston 332 into a linear motion along the x-axis direction and transmits the converted linear motion to first slide body 361A and second slide body 361B.

With this configuration, the configuration of piston cylinder 330 can be made compact in the x-axis direction.

A hand device (310) in the present embodiment includes: a first gripping claw (320A); a second gripping claw (320B) facing the first gripping claw (320A) while being spaced apart therefrom and gripping an object together with the first gripping claw (320A); a first drive mechanism (351) including a motor (340) and causing at least one gripping claw (320) of the first gripping claw (320A) and the second gripping claw (320B) to slide, using an output from the motor (340) as a driving force; a second drive mechanism (352) including an air-based piston cylinder (330) and causing the at least one gripping claw (320) of the first gripping claw (320A) and the second gripping claw (320B) to slide, using an output from the piston cylinder (330) as a driving force; and a slide body (361) that slidably supports the gripping claw (320). The first drive mechanism (351) is connected to the gripping claw (320) and causes the gripping claw

(320) to slide relative to the slide body (361). The second drive mechanism (352) is connected to the slide body (361) and causes the slide body (361) to slide.

With this configuration, a sufficient slide length of the gripping claw can be achieved by using the first drive mechanism, which uses an output from the motor as a driving force, for sliding of the gripping claw. As a result, various objects of different dimensions can be gripped without preparing a plurality of hand devices. Additionally, a sufficient grip force for the object can be achieved by using the second drive mechanism that uses an output from the air-based piston cylinder as a driving force for sliding of the gripping claw. As a result, falling of the object from the hand device can be prevented more reliably. Further, the first drive mechanism is connected to the gripping claw and causes the gripping claw to slide relative to the slide body, and the second drive mechanism is connected to the slide body and causes the slide body to slide. With this configuration, when the gripping claw is caused to slide by the first drive mechanism, the gripping claw alone can be caused to slide with the slide body and the second drive mechanism remaining stationary. This can reduce the weight of the portion slid by the first drive mechanism, which uses an output from the motor as a driving force, thereby improving the responsiveness of the sliding motion and easily processing the wires and pipes from the piston cylinder in the second drive mechanism that uses an output from the air-operated piston cylinder as a driving force.

The robot (21) in the present embodiment includes a first arm (27), a second arm (28) pivotably attached to the first arm (27), and a hand device (310) pivotably attached to the second arm (28).

In workpiece hand 310 in the present embodiment, also, gripping claw 320 can be caused to slide using only first drive mechanism 351, which uses an output from servomotor 340 as a driving force. In this case, controller 610 (robot control unit 620) may monitor a torque load through the current value of servomotor 340 and perform control according to the torque load.

In one example, workpiece W made of resin or a thin material can be gripped by causing gripping claw 320 to slide by sliding first drive mechanism 351. At this time, controller 610 (robot control unit 620) stops servomotor 340 when the current value of servomotor 340 exceeds a threshold. This can prevent an excessively large grip force from being applied to workpiece W from gripping claw 320, thereby avoiding damage to workpiece W.

In another example, workpiece W is gripped by causing gripping claw 320 to slide by first drive mechanism 351. At this time, controller 610 (robot control unit 620) detects an angle position of servomotor 340 when the current value of servomotor 340 exceeds the threshold, using an encoder or the like of servomotor 340. Controller 610 (robot control unit 620) calculates the dimensions of workpiece W based on the detected angle position of servomotor 340.

In still another example, a positioning block for workpiece W is installed in workpiece stocker 71. As gripping claw 320 is caused to slide by first drive mechanism 351, workpiece W is pressed against the positioning block by gripping claw 320. At this time, controller 610 (robot control unit 620) stops servomotor 340 when the current value of servomotor 340 exceeds a threshold. This allows workpiece W to be pressed against the positioning block with an appropriate force, thereby disposing workpiece W at an appropriate position in workpiece stocker 71.

It should be understood that the embodiment disclosed herein has been presented for the purpose of illustration and non-restrictive in every respect. It is therefore intended that the scope of the present invention is defined by claims, rather than the description above, and encompasses all modifications and variations equivalent in meaning and scope to the claims.

This application is based on Japanese Patent Application No. 2024-105159 filed on June 28, 2024 with the Japan Patent Office, the entire contents of which are hereby incorporated by reference.

### REFERENCE SIGNS LIST

10, 10S, 10T machine tool; 12 machining area; 14 cover body; 16 opening; 18 operation panel; 21 robot; 22 robot base; 23 driving servomotor; 26 base; 27 first arm; 28 second arm; 29 hand attachment portion; 31, 31S, 31T pallet stocker; 51 transport operation panel; 56, 56h, 56i, 56j, 56k fence; 61, 61S, 61T setup station; 71 workpiece stocker; 81 hand stocker; 100 transport system; 101 swivel center axis; 102, 103, 105 pivot center axis; 104, 106 rotation center axis; 113 space; 120 grip portion; 120A first grip portion; 120B second grip portion; 120C third grip portion; 120D fourth grip portion; 121, 367 groove portion; 126, 128, 231 central axis; 127 predetermined axis; 210 master hand; 220 clamp mechanism; 221 grip insertion hole; 226, 332 piston; 227, 323 protrusion; 230 sensor; 310 workpiece hand; 311 support base; 320 gripping claw; 320A first gripping claw; 320B second gripping claw; 321 claw body portion; 322 base portion; 330 piston cylinder; 331 wedge block; 331A first wedge brock; 331B second wedge block; 331a first tapered surface; 331b second tapered surface; 333 third wedge block; 333a third tapered surface; 333b fourth tapered surface; 334 power transmission portion; 336 guide block; 337 air valve; 340 servomotor; 342 coupling portion; 343 screw; 343A first screw; 343B second screw; 344 nut; 344A first nut; 344B second nut; 346 tip; 346A first tip; 346B second tip; 347, 348 bearing; 351 first drive mechanism; 352 second drive mechanism; 361 slide body; 361A first slide body; 361B second slide body; 362 guide portion; 363 guide groove; 366 slide body portion; 371 first gear; 372 second gear; 410 pallet; 510 shelf plate; 515 fixed shelf plate; 520, 520p, 520q, 520r pallet support portion; 525 tapered cone receiving portion; 531 horizontal frame; 532 vertical frame; 533 pin hole; 550 frame body; 551 pillar; 560 support portion; 561 plate; 610 controller; 620 robot control unit; 621 program storage unit; 622 program analysis unit; 623 axis control unit; 624 hand control unit; 625 parameter storage unit; 630 input/output device; 641 operation program; 660 operation acceptance unit; 670 display unit; 710 teaching hand; 720 touch probe; 720g contactor; La first length; Lb second length; Lc third length; St stroke length; W workpiece.

## Claims

1. A hand device comprising:
a first gripping claw;
a second gripping claw facing the first gripping claw while being spaced apart therefrom, the second gripping claw gripping an object together with the first gripping claw;
a first drive mechanism including a motor and causing at least one gripping claw of the first gripping claw and the second gripping claw to slide, using an output from the motor as a driving force; and
a second drive mechanism including an air-based piston cylinder and causing the at least one gripping claw of the first gripping claw and the second gripping claw to slide, using an output from the piston cylinder as a driving force.

2. The hand device according to claim 1, wherein when the object is gripped by the first gripping claw and the second gripping claw,
the first drive mechanism causes the at least one gripping claw to slide such that a distance between the first gripping claw and the second gripping claw changes from a first length La to a second length Lb smaller than the first length La, and
the second drive mechanism causes the at least one gripping claw to slide such that the distance between the first gripping claw and the second gripping claw changes from the second length Lb to a third length Lc smaller than the second length Lb.

3. The hand device according to claim 2, wherein a slide length (Lb - Lc) of the first gripping claw and the second gripping claw by the second drive mechanism is smaller than a slide length (La - Lb) of the first gripping claw and the second gripping claw by the first drive mechanism.

4. The hand device according to any one of claims 1 to 3, further comprising:
a first slide body supporting the first gripping claw in a slidable manner along a first direction and caused to slide in the first direction by the second drive mechanism; and
a second slide body supporting the second gripping claw in a slidable manner along the first direction and caused to slide along the first direction by the second drive mechanism,
wherein the first drive mechanism further includes
a first screw supported by the first slide body to be rotatable about a predetermined axis parallel to the first direction, a rotational motion from the motor being input to the first screw,
a first nut screwed onto the first screw and connected to the first gripping claw,
a second screw supported by the second slide body to be rotatable about the predetermined axis and having a reverse thread with respect to a thread provided on the first screw,
a second nut screwed onto the second screw and connected to the second gripping claw, and
a coupling portion coupling the first screw to the second screw to regulate relative rotation of the first screw and the second screw about the predetermined axis and permit relative sliding of the first screw and the second screw in an axial direction of the predetermined axis.

5. The hand device according to claim 4, wherein the piston cylinder includes
a piston performing a linear motion along a second direction orthogonal to the first direction, and
a power transmission portion converting the linear motion along the second direction from the piston into a linear motion along the first direction and transmitting the converted linear motion to the first slide body and the second slide body.

6. A robot comprising:
a first arm;
a second arm pivotably attached to the first arm; and
the hand device according to any one of claims 1 to 3 pivotably attached to the second arm.
